# EUROPEAN PATENT APPLICATION

(11) **EP 3 342 298 A1**
(43) Date of publication of application: **04.07.2018**
(21) Application number: 17211058.7
(22) Date of filing: 29.12.2017
(51) Int. Cl.: A41H 3/08

(54) **PATTERN AND METHOD FOR ASSEMBLY OF GARMENTS**

(30) Priority: 31.12.2016 AU 2016905399 P
(71) Applicant: Mitton, Jo Ann, 2042 Newton, New South Wales (AU)
(72) Inventor: Mitton, Jo Ann, 2042 Newton, New South Wales (AU)
(74) Representative: Groth & Co. KB

(57) **Abstract**

A simplified code for instructing garment assembly steps is disclosed. The code is integrated with a garment pattern and printed onto a textile sheet. The textile sheet is assembled into a garment using an associated method.

## Description

### Field of the Invention

The present invention relates generally to the assembly of items and related patterns.

The invention has been developed primarily, but not solely, for use in the manual assembly of garments of clothing, furnishings, and toys.

### Background of the Invention

Any discussion of the prior art throughout the specification should in no way be considered as an admission that such prior art is widely known or forms part of common general knowledge in the field.

Domestic seamstress and dressmakers will typically use a cumbersome, multi-stage approach in the assembly from fabric of items such as clothing, furnishing and toys. For ease of reference, the approach will be described in relation to the assembly of items of clothing.

First, the seamstress or dressmaker drafts or otherwise obtains a pattern which is printed or drawn on thin sheets of paper. The desired clothing size or recipient measurements are used to identify the correct pattern outline that should be used. Minor adjustments are able to be made at this stage. For example, when manufacturing a dress where the desired size of the top portion is different to the bottom, the selected pattern outline may also be different for top and bottom and a new tapered outline added to connect the top and bottom portions. This necessarily requires the seamstress to have some expertise in pattern adjustment.

The dressmaker then cuts around the selected pattern outline and attaches the paper pattern to the desired fabric sheets using pins or some other temporary attachment means. In this stage, instructions accompanying the pattern are heavily consulted to ensure that the paper pattern is attached to the fabric in the correct orientation and location to ensure that any decorative aspects of the fabric appear in the correct alignment in the completed garment.

The dressmaker then cuts around the paper pattern outline to cut the fabric sheets into fabric components to be used in the assembly of the garment. Again, the instructions must be consulted as additional information located on the paper pattern must be transferred to the fabric before the paper pattern is unpinned. This information typically includes notations such as: lines on the paper, which are marked with chalk or pinned into the fabric; notches on the paper, which are cut into the fabric; and circles or dots on the paper, which are marked on the fabric using pin holes or chalk marks.

The paper is removed from the fabric and step-by-step instructions are followed to assembly the fabric components into the garment. These steps will necessarily include activities such as hemming to a width identified on the paper patter, adding darts and tucks where the fabric is marked using pins, and connecting fabric components along edges and at locations indicated by notches and pin holes.

With existing methods, once the fabric components are cut out it is very hard to identify how the garment pieces start joining together correctly. This also makes it difficult to adjust the garment as it is being made which may result in undoing work to make adjustments or a poor quality fitting.

It will be appreciated that it is often necessary to refer back to the printed paper pattern to identify where the dressmaker should be examining the fabric to find a pin hole or chalk mark. It is also difficult to distinguish between different markings, as these are all provided in the same colour and using the same notation on the paper pattern and will look the same when marked on the fabric.

A further limitation of the traditional method is that detailed and comprehensive written instructions are not globally accessible due to use of different languages. Replicating instructions in multiple languages is costly and many patterns are provided in a single language or translated into only the more widely used languages.

US2017258164 describes a process using an on screen display to assist assembly workers in connecting fabric panels. The display includes images of the cutout fabric panels, complete with notations such as, for example, seam notations, stitch notations, alignment marks and machine readable identifiers. A tabulated set of assembly task instructions is also provided on the display screen. Pieces of fabric in a tote arrive at the assembly station. Each piece of fabric has a machine readable identifier and assembly notations printed on it. The worker scans the identifier to bring up the correct instructions on the display and then refers to the step-by step instructions on the display to complete the listed tasks.

The process describe in US2017258164 is suitable for the repetitive mass production of identical garments, which are not fitted for the recipient. This process also utilises relatively simple assembly techniques such as hemming and connecting of seams which can be designated on the display and fabric pieces by different line formats.

The need to reference a display for instructions is inconvenient. Additionally, a domestic dressmaker is unlikely to have access to such equipment, nor have the ability to convert their designs to a format useful in the machine. Depending upon the pattern used, the same difficulties in identifying markers and points of interest on the fabric pieces will still exist.

It is an object of the present invention to overcome or ameliorate at least one of the disadvantages of the prior art, or to provide a useful alternative.

### Summary of the Invention

According to a first aspect the present invention provides a code for use in the assembly of an item from discrete component pieces, the code comprising a plurality of unique instruction markers, the markers corresponding to a series of assembly steps required to assemble the component pieces into the item.

Preferably the item is selected from any one of: dress, shirt, hat, skirt, jacket, curtain, furniture cover, or toy.

Preferably, the markers comprise a plurality of shapes. More preferably, the shapes are selected from the group comprising: circle, square, triangle, hexagon, line, or any combination thereof. The different shapes may be used to provide different information or assembly step instructions for the dressmaker.

Preferably, the shapes are different colours. The colours preferably represent locations on the component piece, including front, back, side, outline, attachment point.

In some embodiments, the markers comprise alphanumerical characters. These characters may be sequential numbers or letters, words or phrases. The markers may include mirror image alphanumeric characters. Alphanumeric characters are advantageously used in the assembly of asymmetric items, but can be used for any type of item. Each alphanumeric character is superimposed on a respective coloured shape.

In these and other embodiments, the markers comprise symbols. Each symbol is preferably superimposed on a respective coloured shape. The symbols may be in the form of simple dots. Advantageously, symbols can be used in the assembly of symmetric items where component pieces are mirror images of one another.

According to a second aspect the present invention provides a pattern for use in the assembly of an item from discrete component pieces comprising an outline of at least one component piece, wherein the at least one component piece is marked with the code according to the first aspect.

Preferably, the pattern also comprises written information which supplements assembly step information provided by the unique instruction markers.

According to a third aspect the invention provides a textile sheet comprising the pattern as defined in the second aspect.

According to another aspect the invention provides a method of assembling an item, comprising the steps of:
a) obtaining one or more component pieces cut from one or more textile sheets according to claim14, wherein the obtained component pieces are suitable for assembly into the item; and
b) performing the series of assembly steps indicated by the unique identifiers marked on the obtained component pieces thereby to assemble the components pieces into the item.

Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

### Brief Description of the Drawings

Preferred embodiments of the invention will now be described, by way of example only, with reference to the accompanying drawings in which:
Figure 1 shows an example of a plain colour dot code;
Figure 2 shows an example of a mirror dot code;
Figure 3 shows an example of a numerical dot code;
Figure 4 shows a first embodiment of a clothing pattern using the colour code of Figure 1, the mirror code of Figure 2 and the numerical code of Figure 3;
Figure 5 shows the clothing pattern of Figure 4 printed onto a decorative fabric;
Figure 6 shows a second embodiment of a clothing pattern using the numerical code of Figure 3;
Figure 7 shows the clothing pattern of Figure 6 printed onto a decorative fabric;
Figure 8 shows a third embodiment of a clothing pattern using the colour code of Figure 1, and the numerical code of Figure 3;
Figure 9 shows the clothing pattern of Figure 8 printed onto a decorative fabric;
Figure 10 shows a fourth embodiment of a clothing pattern using the colour code of Figure 1 and the mirror code of Figure 2;
Figure 11 shows the clothing pattern of Figure 10 printed onto a decorative fabric;
Figure 12 shows another example of a plain colour dot code;
Figure 13 shows another example of a dot code;
Figure 14 shows another example of a numerical code and a corresponding mirror image numerical code; and
Figure 15 shows a fifth embodiment of a clothing pattern using the dot code of Figure 13.

### Preferred Embodiments of the Invention

The present invention will now be described with reference to the following examples which should be considered in all respects as illustrative and non-restrictive.

While the invention may be used in the assembly of many items, including furnishings and toys, it will be described hereafter with reference to the application of the invention to the assembly of clothing garments. These garments may include, for example, dresses, shirts, hats, skirts, and jackets.

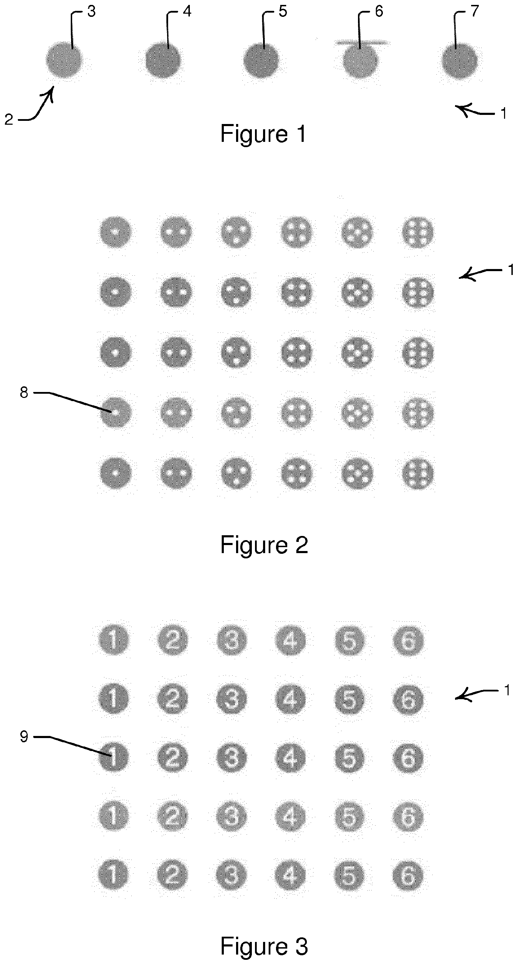

As best shown in Figure 1 to 3, a code (1) for use in the assembly of garments includes a plurality of unique instruction markers. Each marker provides information regarding an assembly step that is required to assemble the garment.

The code (1) includes markers in the form of a number of different coloured circles (2), shown in Figure 1 as pink (3), green (4), blue (5), sky blue (6) and orange (7). In one embodiment, the coloured circles provide location information, defining separate sections of the components piece. These include front (3), back (4), side (5), outline (6) and attachments (7).

The code (1) also includes symbols (8), shown in Figure 2 as dots. In this embodiment, increasing numbers of dots (8) are shown, however it will be appreciated that other distinctive symbols may be used. In the embodiment shown, for example, each coloured circle (2) has from one to six white dots (8), allowing for up to thirty assembly steps to be identified using these markers..

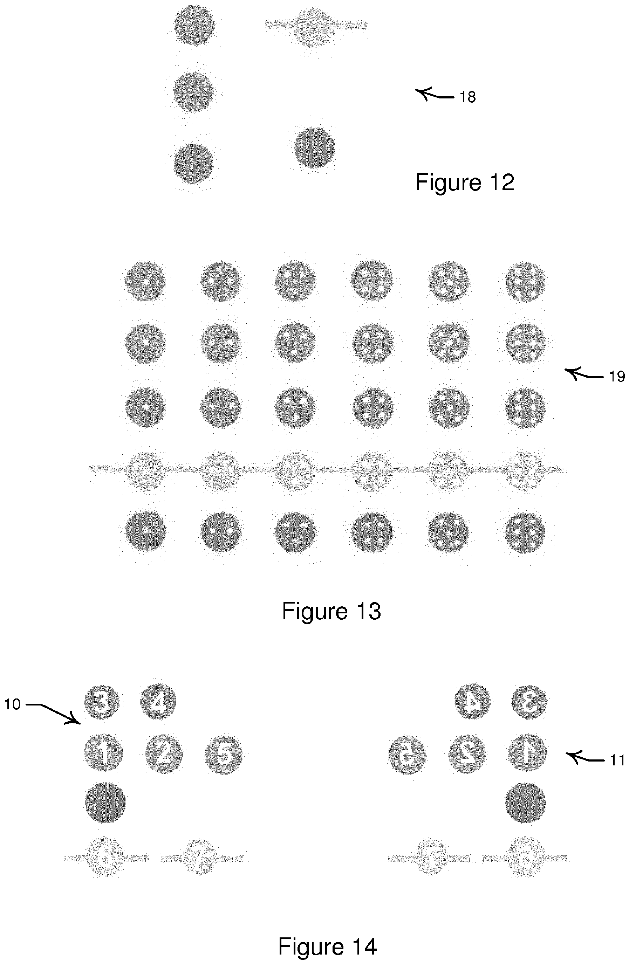

The code (1) also includes alphanumeric characters (9), shown in Figure 3 as the numbers 1 to 6 inclusive superimposed on coloured circles. As shown in Figure 14, an alphanumeric code (10) may be used together with a mirror image alphanumeric code (11) to provide additional information.

In the embodiments shown, the symbols (8) and alphanumerical characters (9) are superimposed on the coloured circles (2). These combinations can be used as balance points or to provide location or attachment information. It is appreciated that each of the types of markers may be used separately or together, depending upon the assembly requirements..

The markers may include mirror image alphanumeric characters. Alphanumeric characters are advantageously used in the assembly of asymmetric items, but can be used for any type of item. Each alphanumeric character is superimposed on a respective coloured shape.

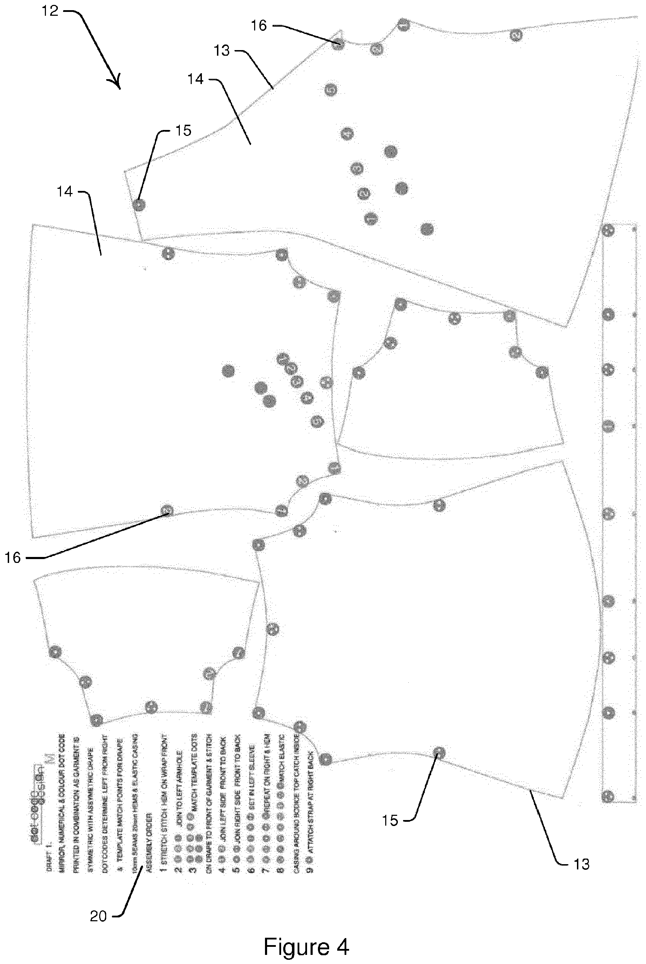

Figure 4 shows a first embodiment of a pattern (12) for use in the assembly of a garment. The pattern includes an outline (13) for each component piece (14) of the garment. The component pieces (14) are marked with the code in the form of dotted circles (15) and numbered circles (16).

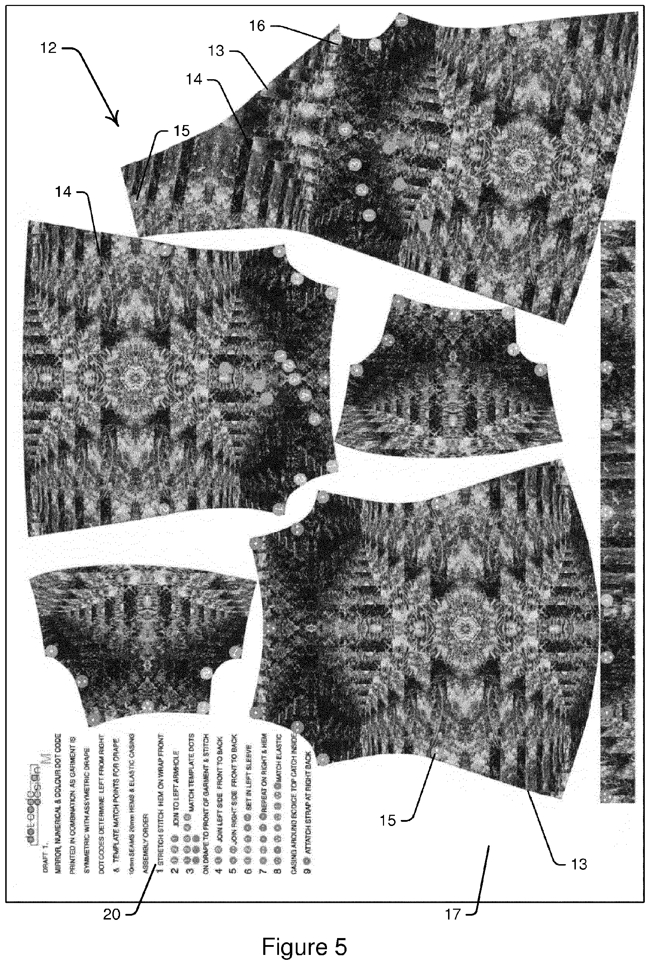

Figure 5 shows the same pattern (12) as shown in Figure 4 printed on a sheet of textile or fabric (17). The outline (13) for each component piece (14) is filled in with a decorative image. As each component piece is printed onto the fabric, the decorative image can be aligned inside the component piece outline to ensure that the completed garment has the desired aesthetic appearance.

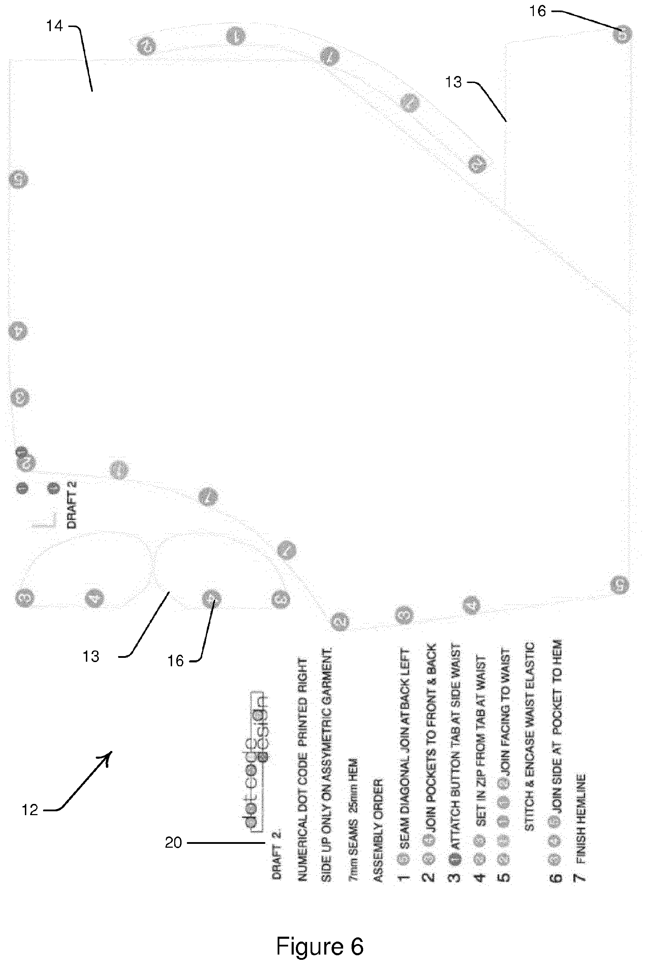

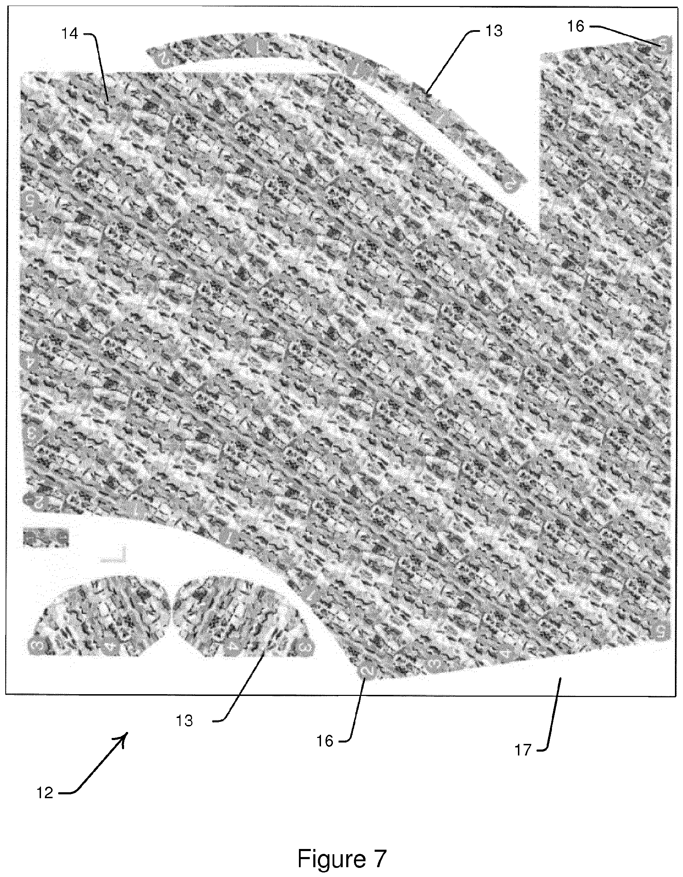

Figure 6 shows a second embodiment of a pattern (12). This pattern uses a code including numbered circles (16) only. Figure 7 shows the same pattern printed on a sheet of fabric (17) with each component piece (14) filled in with a decorative image.

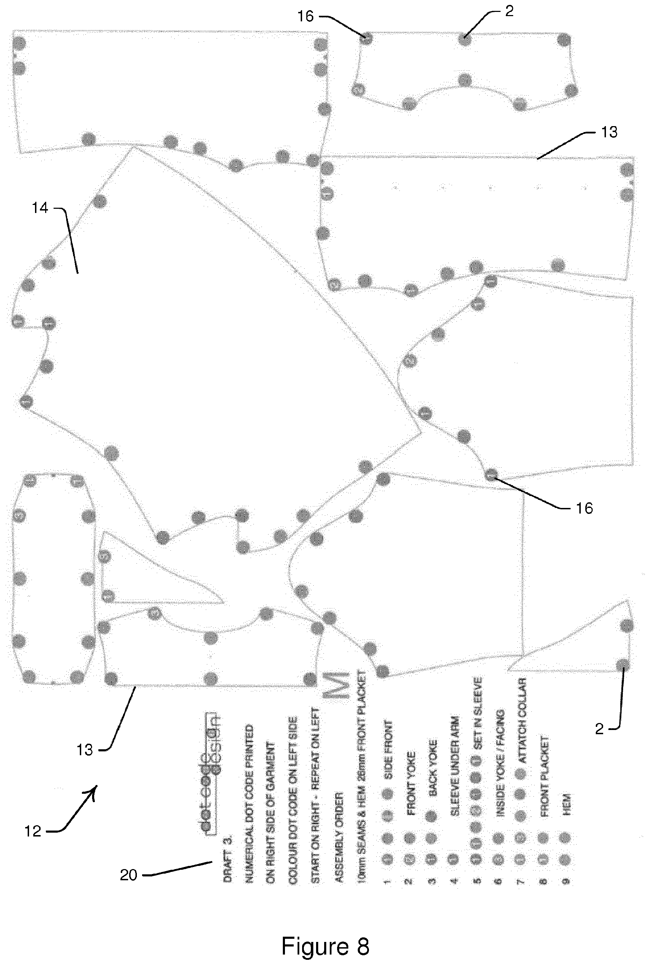

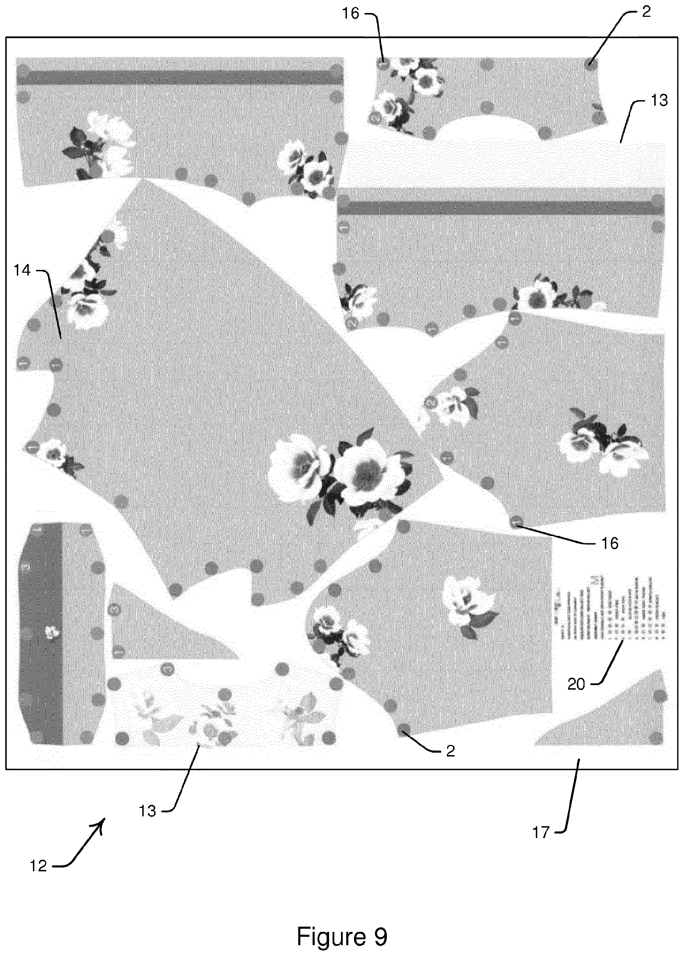

Figure 8 shows a third embodiment of a pattern (12). This pattern uses a code including blank circles (2) and numbered circles (16). Figure 9 shows the same pattern printed on a sheet of textile or fabric (17) with each component piece (14) filled in with a decorative image.

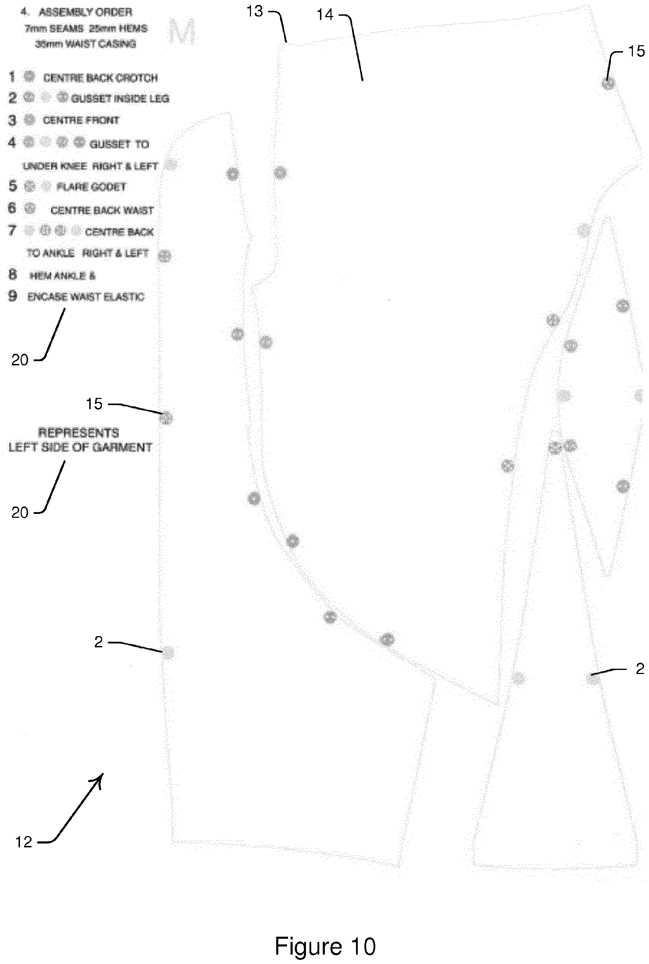

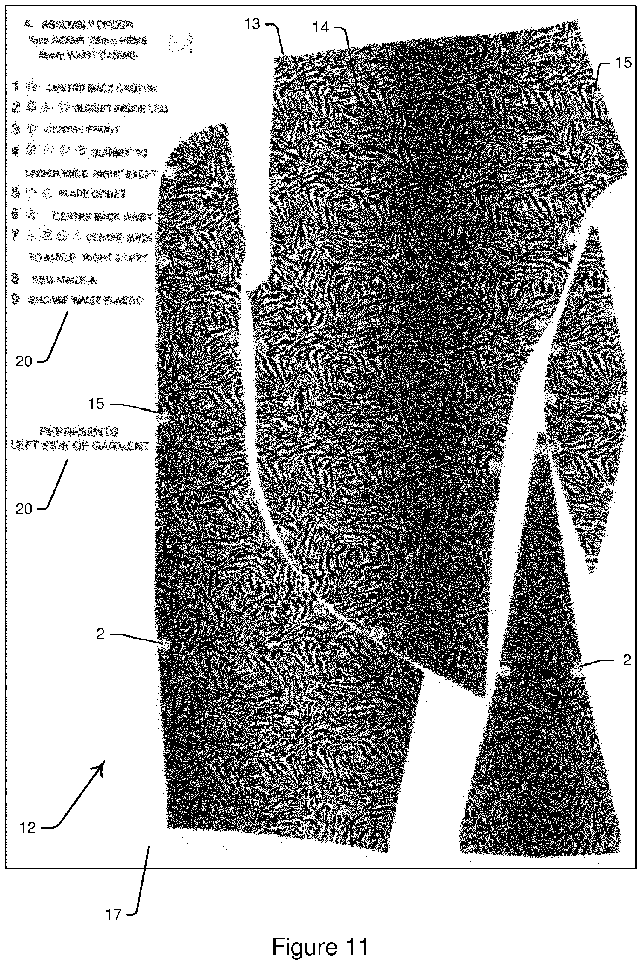

Figure 10 shows a fourth embodiment of a pattern (12). This pattern uses a code including blank circles (2) and dotted circles (15). Figure11 shows the same pattern printed on a sheet of textile or fabric (17) with each component piece (14) filled in with a decorative image.

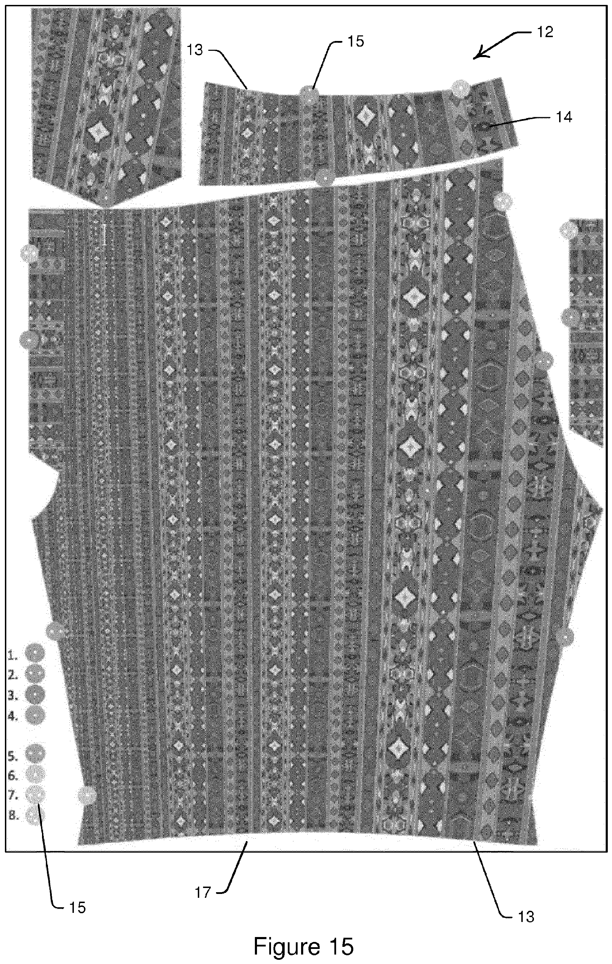

Figures 12 to 14 show alternative embodiments of the code. In Figure 12, an alternative form of the coloured circles (18) is provided while Figure 13 shows these circles used in combination with a dot code (19). Figure 14 shows a numerical code (10) and a corresponding mirror image numerical code (11). Figure 15 provides a fifth embodiment of a pattern (12) printed on a textile sheet (17) using a code including the dot code (19) of Figure 13.

Each of the patterns can also includes brief written instructions (20) displayed adjacent to the component pieces. It is appreciated that these instructions may instead be displayed on the opposite side of the sheet and within the outline of the component piece. In this case, the brief instructions (20) would be visible to the dressmaker during assembly, but located on the inside of the garment once completed.

Each of the patterns shown in Figures 5, 7, 9, 11 and 15 can be used to easily assemble a garment. First, the component pieces (14) for the desired garment are cut from the relevant textile sheet. Then each of the series of assembly steps are performed thereby to assemble the component pieces into the desired garment. In the figures, these assembly steps are indicated by numbered items in the brief written instructions (20) where the code (1) is used to easily identify matching points in order to perform each step. These assembly steps may include, among others, joining seams in the correct sequence, stitching hems, matching and stitching fabric at dot locations, attaching straps and buttons, setting in zippers, joining pockets, joining facing, encasing elastic, adding gussets, adding darts, adding tucks, adding pleats, indications of starting location, and instructions to repeat actions.

Advantageously, the diagrammatic feature of the code makes the associate pattern and method globally accessible independent of language.

Further advantageously, the code can be embedded into a pattern on selected material. Alternatively, the code can be printed with a decorative pattern into the desired format for each component piece. This ensures advantageous alignment of the decoration when the garment is completed. Printing the decoration only inside the component piece outline is also advantageous due to cost saving associated with the reduction in pigment dye required. Any desired decoration or image is then available to be transformed into a fabric for a garment.

Further advantageously, the code provides highly visible information that is easy to find and understand during the assembly process. The code also makes it easy during garment assembly to identify what the orientation and location of each component piece will be in the completed garment. It is therefore simple to fit the garment to the future wearer as the garment is being assembled.

In is envisaged that the code, pattern and method will provide effective educational tools for basic to advanced apparel and furnishing classes.

The invention provides an easy-to-use code, pattern and method for the cut and assembly stage of dressmaking which is incorporated into garment patterns along with the desired textile design.

Although the invention has been described with reference to specific examples it will be appreciated by those skilled in the art that the invention may be embodied in many other forms.

## Claims

1. A code for use in the assembly of an item from discrete component pieces, the code comprising:
a plurality of unique instruction markers, the markers corresponding to a series of assembly steps required to assemble the component pieces into the item.

2. A code according to claim 1, wherein the markers comprise a plurality of shapes.

3. A code according to claim 2, wherein the shapes are selected from the group comprising: circle, square, triangle, hexagon, line, or any combination thereof.

4. A code according to claim 2 or claim 3, where the shapes are different colours.

5. A code according to claim 4, wherein the colours represent locations on the component piece, including front, back, side, outline, attachment point.

6. A code according to any one of claims 2 to 5, wherein the markers comprise alphanumerical characters.

7. A code according to claim 6, wherein the markers comprise mirror image alphanumeric characters

8. A code according to claim 6 or claim 7 wherein each alphanumeric character is superimposed on a respective coloured shape.

9. A code according to any one of claims 2 to 8, wherein the markers comprise symbols.

10. A code according to claim 9 wherein each symbol is superimposed on a respective coloured shape.

11. A code according to any one of claims 1 to 10, wherein the item is selected from any one of: dress, shirt, hat, skirt, jacket, curtain, furniture cover, toy.

12. A pattern for use in the assembly of an item from discrete component pieces comprising:
an outline of at least one component piece,
wherein the at least one component piece is marked with the code according to any one of claims 1 to 11.

13. A pattern according to claim 12 comprising written information which supplements assembly step information provided by the unique instruction markers.

14. A textile sheet comprising:
the pattern as defined in claim 12 or claim 13.

15. A method of assembling an item, comprising the steps of:
a) obtaining one or more component pieces cut from one or more textile sheets according to claim14, wherein the obtained component pieces are suitable for assembly into the item ; and
b) performing the series of assembly steps indicated by the unique identifiers marked on the obtained component pieces thereby to assemble the components pieces into the item.
